# EUROPEAN PATENT SPECIFICATION

(11) **EP 3 082 376 B1**
(45) Date of publication and mention of the grant of the patent: **04.11.2020**
(21) Application number: 14877405.2
(22) Date of filing: 06.01.2014
(51) Int. Cl.: H04W 64/00, G08B 21/24, H04W 24/04, H04W 88/08

(54) **NETWORK DEVICE DISCOVERY METHOD AND NETWORK DEVICE DISCOVERY SYSTEM**
NETZWERKVORRICHTUNGERFASSUNGSVERFAHREN UND NETZWERKVORRICHTUNGERFASSUNGSSYSTEM
PROCÉDÉ DE DÉCOUVERTE DE DISPOSITIF DE RÉSEAU ET SYSTÈME DE DÉCOUVERTE DE DISPOSITIF DE RÉSEAU

(43) Date of publication of application: 19.10.2016
(73) Proprietor: Huawei Technologies Co., Ltd., Longgang District Shenzhen, Guangdong 518129 (CN)
(72) Inventor: ZOU, Chang, Shenzhen Guangdong 518129 (CN)
(74) Representative: Goddar, Heinz J.
(86) International application number: PCT/CN2014/070155
(87) International publication number: WO 2015/100743

(56) References cited:
- CN-A- 101 135 728
- CN-A- 101 378 554
- CN-U- 201 937 745
- US-A- 6 166 652
- US-A1- 2004 180 673
- US-A1- 2008 020 782
- US-A1- 2009 291 636

## Description

### TECHNICAL FIELD

Embodiments of the present invention relate to communications technologies, and in particular, to a network device discovery method, a network device, and a network device discovery system.

### BACKGROUND

With development of a communications system, mass deployment of network devices has emerged. For example, in a scenario of wireless network indoor coverage, an indoor distributed remote node, a wireless local area network access point (Wireless Local Area Networks Access Point, WLAN AP for short), a small cell, and the like are installed in a covert and intensive manner. When these network devices need to be maintained at a near end, how to precisely discover these network devices becomes an operation and maintenance difficulty.

In the prior art, these network devices are manually searched for according to devices locations recorded during engineering installation. However, it is difficult to ensure precision of a record of the network device locations recorded during engineering installation, and with an adjustment of the network device locations, the record of the network device locations needs to be constantly updated. Therefore, maintenance of the record of the network device locations is difficult. In addition, when an engineer arrives at a site of the network devices, for a network device in a covert location, locating is difficult because there is no reference. Therefore, efficiency of network device searching is low.

United States patent application US 2009/0291636 A1 discloses a system and method for locating a portable electronic device, such as a mobile computer, a personal digital assistant, laptop or cellphone. In response to receiving a call from a telephone, the portable electronic device activates a speaker to emit a sound signal, or activates background illumination so as to allow the device to be retrieved.

United States patent US 6,166,652 discloses a system and method for locating misplaced items, such as lost keys. The key holder is adapted to emit sound signals or flashing light in response to receiving a telephone call. A similar configuration is described in US 2008/0020782 A1, wherein the key holder may in addition display messages.

Another network-based service for retrieving misplaced mobile phones is disclosed in US 2004/0180673 A1.

### SUMMARY

The invention relates to a network device discovery method according to claim 1 and a network device discovery system according to claim 7. The dependent claims relate to preferred embodiments.

Embodiments of the present invention provide a network device discovery method, and a network device discovery system, which resolves a problem in the prior art that efficiency of discovering a network device by an engineer is low.

According to a first aspect of the present invention, a network device discovery method is provided, including:
receiving, by a network device, a sensor signal sent by a sensor signal transmitter; and
determining to send, by the network device, a signal to an alerter according to the sensor signal, so that the alerter sends an alert signal, where the alert signal is used to indicate a location of the network device and/or indicate that the network device exists within a preset range.

The alerter is integrated into the sensor signal transmitter

In a first possible implementation manner of the first aspect, the determining to send, by the network device, a signal to an alerter according to the sensor signal includes:
after the network device receives the sensor signal, and determines that a device discovery switch of the network device is in an enabled state, sending the signal to the alerter.

According to the first aspect, in a second possible implementation manner of the first aspect, before the receiving, by a network device, a sensor signal sent by a sensor signal transmitter, the method further includes:
if the network device determines that the device discovery switch is in an enabled state, executing the step of receiving, by a network device, a sensor signal sent by a sensor signal transmitter.

With reference to the first aspect or the first or the second possible implementation manner of the first aspect, in a third possible implementation manner of the first aspect, the method further includes:
when the network device is in a fault state, setting the device discovery switch to the enabled state; and/or
when the network device is at a starting stage, setting the device discovery switch to a disabled state; and/or
receiving, by the network device, a configuration control message that is sent by a network management device and includes a switch configuration state of the device discovery switch, and setting a state of the device discovery switch according to the switch configuration state.

According to the third possible implementation manner of the first aspect, in a fourth possible implementation manner of the first aspect, when the switch configuration state is the disabled state, the setting, by the network device, a state of the device discovery switch according to the switch configuration state includes:
determining, by the network device, whether the network device is in a non-fault state, and if the network device is in the non-fault state, setting the device discovery switch to the disabled state.

With reference to the first aspect or any of the preceding possible implementation manners of the first aspect, in a fifth possible implementation manner of the first aspect, an additional first alerter is integrated into the network device (700).

According to a second aspect of the present invention, a network device discovery system is provided, including: a sensor signal transmitter and a network device;
the network device comprising:
a receiving module, configured to receive a sensor signal sent by a sensor signal transmitter; and
a sending module, configured to determine to send a signal to an alerter according to the sensor signal, so that the alerter sends an alert signal, where the alert signal is used to indicate a location of the network device and/or indicate that the network device exists within a preset range.

The alerter is integrated into the sensor signal transmitter

In a first possible implementation manner of the second aspect, the network device further includes: a processing module; where
the processing module is configured to: if the receiving module receives the sensor signal, and a device discovery switch of the network device is in an enabled state, send the signal to the alerter; or before the receiving module receives the sensor signal sent by the sensor signal transmitter, if the device discovery switch is in the enabled state, control the receiving module to receive the sensor signal sent by the sensor signal transmitter.

According to the first possible implementation manner of the second aspect, in a second possible implementation manner of the second aspect, the processing module is further configured to:
when the network device is in a fault state, set the device discovery switch to the enabled state; and/or
when the network device is at a starting stage, set the device discovery switch to a disabled state; and/or
receive a configuration control message that is sent by a network management device and includes a switch configuration state of the device discovery switch, and set a state of the device discovery switch according to the switch configuration state.

According to the second possible implementation manner of the second aspect, in a third possible implementation manner of the second aspect, when the switch configuration state is the disabled state, the processing module is further configured to:
determine whether the network device is in a non-fault state, and if the network device is in the non-fault state, set the device discovery switch to the disabled state.

With reference to any one of the first to the third possible implementation manners of the second aspect, in a fourth possible implementation manner of the second aspect, the network device discovery system further comprises a first alerter integrated into the network device.

According to a network device discovery method, and a network device discovery system provided in embodiments of the present invention, the network device receives a sensor signal sent by a sensor signal transmitter; and the network device determines to send a signal to an alerter according to the sensor signal, so that the alerter sends an alert signal, where the alert signal is used to indicate a location of the network device and/or indicate that the network device exists within a preset range. This can implement a fast and highly efficient discovery of the network device, reduce difficulty in discovering the network device by network device maintenance personnel, and improve efficiency of discovering the network device.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of Embodiment 1 of a network device discovery method according to the present invention;
FIG. 2 is a flowchart of Embodiment 2 of a network device discovery method according to the present invention;
FIG. 3 is a flowchart of Embodiment 3 of a network device discovery method according to the present invention;
FIG. 4 is a flowchart of Embodiment 4 of a network device discovery method according to the present invention;
FIG. 5 is a schematic structural diagram of Embodiment 1 of a network device according to the present invention;
FIG. 6 is a schematic structural diagram of Embodiment 2 of a network device according to the present invention;
FIG. 7 is a schematic structural diagram of Embodiment 1 of a network device according to the present invention;
FIG. 8 is a schematic structural diagram of Embodiment 2 of a network device according to the present invention; and
FIG. 9 is a schematic structural diagram of Embodiment 1 of a network device discovery system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention.

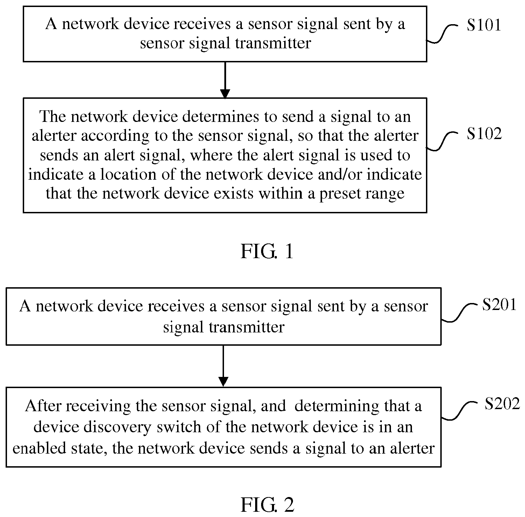

FIG. 1 is a flowchart of Embodiment 1 of a network device discovery method according to the present invention. As shown in FIG. 1, the network device discovery method in this embodiment includes the following steps:
S101. A network device receives a sensor signal sent by a sensor signal transmitter.

Specifically, a scenario to which this embodiment is applicable may be: the network device needs to be discovered in a fast and highly efficient manner when network device maintenance personnel need to maintain the network device at a near end, so as to reduce difficulty in discovering the network device by the network device maintenance personnel, and improve efficiency of discovering the network device.

The sensor signal transmitter in this embodiment may be a device that may be carried or handheld by the network device maintenance personnel and can transmit a sensor signal.

S102. The network device determines to send a signal to an alerter according to the sensor signal, so that the alerter sends an alert signal, where the alert signal is used to indicate a location of the network device and/or indicate that the network device exists within a preset range.

This embodiment is executed by the network device, where the network device includes a sensor.

After receiving the sensor signal that is sent by the network device maintenance personnel by using the sensor signal transmitter and is used for discovering the network device, the sensor may send an electrical signal to the alerter, so that the alerter sends the alert signal, where the alert signal is used to indicate the location of the network device or indicate that the network device exists within the preset range. For example, the alert signal sent by the alerter may be a signal that is easy to find, such as a sound and light, and according to the alert signal sent by the alerter, the network device maintenance personnel may discover the network device or determine that the network device exists within the preset range.

According to the network device discovery method provided in this embodiment, a network device receives a sensor signal sent by a sensor signal transmitter; and the network device determines to send a signal to an alerter according to the sensor signal, so that the alerter sends an alert signal, where the alert signal is used to indicate a location of the network device and/or indicate that the network device exists within a preset range. This can implement a fast and highly efficient discovery of the network device, reduce difficulty in discovering the network device by network device maintenance personnel, and improve efficiency of discovering the network device.

In an embodiment, the alerter is integrated into the network device or the sensor signal transmitter.

Specifically, after receiving the electrical signal sent by the sensor, the alerter integrated into the network device sends the alert signal, and the network device maintenance personnel may discover the network device according to the alert signal sent by the alerter in the network device. When the alerter is integrated into the sensor signal transmitter, the sensor may be a wireless sensor. After receiving the electrical signal sent by the sensor, the alerter integrated into the sensor signal transmitter sends the alert signal, and the network device maintenance personnel may determine, according to the alert signal on the carried or handheld sensor signal transmitter, that the network device that is to be searched for exists within the preset range, for example, the network device exists within 5 meters. It may be understood that, precision of discovering a network device in an embodiment in which the alerter is integrated into the sensor signal transmitter is lower than that in an embodiment in which the alerter is integrated into the network device. However, in some application scenarios, the technical solution in this embodiment can improve the efficiency of discovering the network device to some extent.

In an embodiment, the alerter includes a first alerter and a second alerter, where the first alerter is integrated into the network device, and the second alerter is integrated into the sensor signal transmitter.

Specifically, in this embodiment, the first alerter is disposed in the network device, and the second alerter is disposed in the sensor signal transmitter, which can further improve the efficiency of discovering the network device. For example, when an alert signal sent by the first alerter cannot be identified, the network device maintenance personnel may perform a network device discovery by using an alert signal sent by the second alerter.

FIG. 2 is a flowchart of Embodiment 2 of a network device discovery method according to the present invention. As shown in FIG. 2, the network device discovery method in this embodiment includes the following steps:
S201. A network device receives a sensor signal sent by a sensor signal transmitter.
S202. After receiving the sensor signal, and determining that a device discovery switch of the network device is in an enabled state, the network device sends a signal to an alerter.

Specifically, in this embodiment, a control function of the device discovery switch is provided. When the device discovery switch is on, a sensor and the alerter work properly, and when the device discovery switch is off, the sensor and/or the alerter do/does not receive and/or transmit a signal. The control function of the device discovery switch can ensure that the network device sets the device discovery switch to an enabled state or a disabled state in different scenarios.

According to the network device discovery method provided in this embodiment, a network device receives a sensor signal sent by a sensor signal transmitter, and after receiving the sensor signal, and determining that a device discovery switch of the network device is in an enabled state, the network device sends a signal to an alerter. This can implement a fast and highly efficient discovery of the network device, reduce difficulty in discovering the network device by network device maintenance personnel, and improve efficiency of discovering the network device.

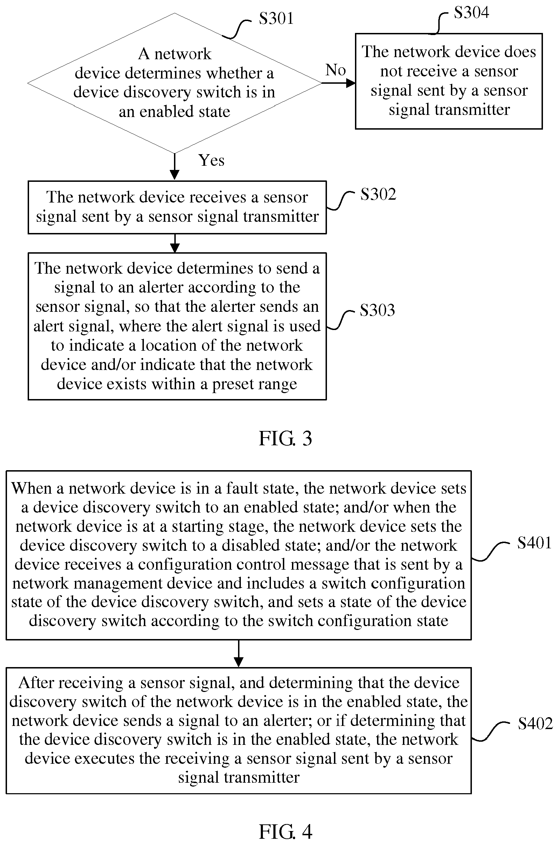

FIG. 3 is a flowchart of Embodiment 3 of a network device discovery method according to the present invention. As shown in FIG. 3, the network device discovery method in this embodiment includes the following steps:
S301. A network device determines whether a device discovery switch is in an enabled state, where if the device discovery switch is in the enabled state, S302 is performed; if the device discovery switch is not in the enabled state, S304 is performed.
S302. The network device receives a sensor signal sent by a sensor signal transmitter.
S303. The network device determines to send a signal to an alerter according to the sensor signal, so that the alerter sends an alert signal, where the alert signal is used to indicate a location of the network device and/or indicate that the network device exists within a preset range.
S304. The network device does not receive a sensor signal sent by a sensor signal transmitter.

Specifically, this embodiment is another possible implementation manner for controlling the device discovery switch. The network device first determines whether the device discovery switch is in the enabled state, and if the device discovery switch is in the enabled state, an operation of receiving the sensor signal sent by the sensor signal transmitter is performed.

According to the network device discovery method provided in this embodiment, a network device determines whether a device discovery switch is in an enabled state, and if the device discovery switch is in the enabled state, receives a sensor signal sent by a sensor signal transmitter, and determines to send a signal to an alerter according to the sensor signal, so that the alerter sends an alert signal, and if the device discovery switch is not in the enabled state, does not receive the sensor signal sent by the sensor signal transmitter. This can implement a fast and highly efficient discovery of the network device, reduce difficulty in discovering the network device by network device maintenance personnel, and improve efficiency of discovering the network device.

FIG. 4 is a flowchart of Embodiment 4 of a network device discovery method according to the present invention. As shown in FIG. 4, the network device discovery method in this embodiment further includes the following steps:
S401. When a network device is in a fault state, the network device sets a device discovery switch to an enabled state; and/or when the network device is at a starting stage, the network device sets the device discovery switch to a disabled state; and/or the network device receives a configuration control message that is sent by a network management device and includes a switch configuration state of the device discovery switch, and sets a state of the device discovery switch according to the switch configuration state.

Specifically, the fault state of the network device may include a power outage of the network device, software and hardware faults of the network device, a transmission fault of the network device, and an environmental abnormality detected by the network device, for example, temperature, humidity, and smog. The network device in this embodiment reads fault state information of the network device, and if the fault state information is that the network device is in the fault state, it indicates that the network device is in a to-be-maintained state, and therefore, the device discovery switch needs to be enabled, so that network device maintenance personnel can discover the network device in a fast and highly efficient manner after arriving at a site of the device, and then perform maintenance. After a fault recovery of the network device, the device discovery switch may be set to the enabled state or the disabled state according to the switch configuration state.

At the starting stage of the network device, the state of the network device may be unstable, and an error response may occur; therefore, the device discovery switch may be disabled, and after the network device completes starting, the device discovery switch is enabled or disabled according to the switch configuration state and whether the network device is in the fault state. Specifically, after the network device completes starting, if the network device is in the fault state, the device discovery switch is enabled; or if the network device is in a normal state, it is determined that the switch configuration state is the enabled state or the disabled state, where if the switch configuration state is the enabled state, the device discovery switch is enabled, or if the switch configuration state is the disabled state, the device discovery switch is disabled.

Specifically, in this embodiment, a configuration control function of the device discovery switch is further provided. The switch configuration state of the device discovery switch may be configured by the network management device by using a configuration channel, where the switch configuration state may be a configuration parameter, and include two states: the enabled state and the disabled state. The switch configuration state of the device discovery switch is the disabled state by default. After receiving the configuration control massage that includes the switch configuration state of the device discovery switch, the network device stores the switch configuration state, and sets the device discovery switch to the enabled state or the disabled state according to the switch configuration state.

In an embodiment, when the switch configuration state is the disabled state, the operation of setting a state of the device discovery switch according to the switch configuration state in S401 may include:
determining, by the network device, whether the network device is in a non-fault state, and if the network device is in the non-fault state, setting the device discovery switch to the disabled state.

Specifically, the network device may determine, by reading the fault state information of the network device, whether the network device is in the non-fault state, and if the network device is in the non-fault state, sets the device discovery switch to the disabled state.

Specifically, when the switch configuration state is the disabled state, before the device discovery switch is disabled, it needs to be determined whether the network device is in the non-fault state in order to configure the device discovery switch in the disabled state, where if the network device is in the non-fault state, the device discovery switch is set to the disabled state; if the network device is not in the non-fault state, the device discovery switch is not set to the disabled state.

S402. After receiving a sensor signal, and determining that the device discovery switch of the network device is in the enabled state, the network device sends a signal to an alerter; or if determining that the device discovery switch is in the enabled state, the network device executes the step of receiving a sensor signal sent by a sensor signal transmitter.

According to the network device discovery method provided in this embodiment, a network device sets a state of a device discovery switch to an enabled state or a disabled state according to a fault state of the network device, whether the network device is at a starting stage, and a received switch configuration state; and when it is determined that the device discovery switch of the network device is in the enabled state, the network device performs an operation of sending a signal to an alerter or performs an operation of receiving a sensor signal sent by a sensor signal transmitter. This can implement a fast and highly efficient discovery of the network device, reduce difficulty in discovering the network device by network device maintenance personnel, improve efficiency of discovering the network device, and further implement enabling of the device discovery switch when the network device is faulty, so that the network device maintenance personnel can discover the network device in a fast and highly efficient manner after arriving at a device site, and then perform maintenance, and disable the device discovery switch at the starting stage of the network device, so as to ensure stability of a device discovery.

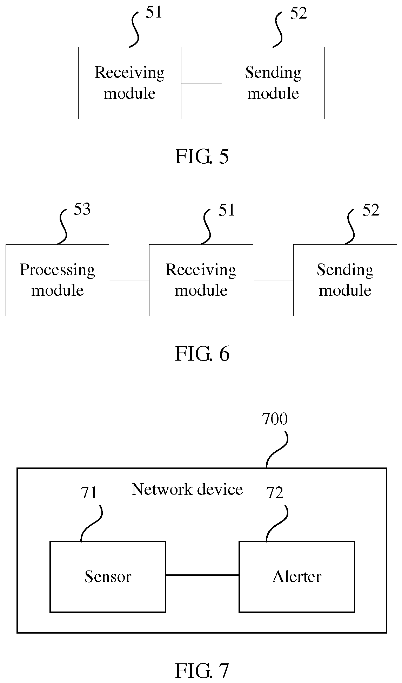

FIG. 5 is a schematic structural diagram of Embodiment 1 of a network device according to the present invention. As shown in FIG. 5, the network device in this embodiment includes: a receiving module 51 and a sending module 52, where the receiving module 51 is configured to receive a sensor signal sent by a sensor signal transmitter, and the sending module 52 is connected to the receiving module 51, and is configured to determine to send a signal to an alerter according to the sensor signal, so that the alerter sends an alert signal, where the alert signal is used to indicate a location of the network device and/or indicate that the network device exists within a preset range.

In an embodiment, the alerter is integrated into the network device or the sensor signal transmitter.

In an embodiment, the alerter includes a first alerter and a second alerter, where the first alerter is integrated into the network device, and the second alerter is integrated into the sensor signal transmitter.

The device in this embodiment may be used to execute the technical solution in the method embodiment shown in FIG. 1, and implementation principles and technical effects thereof are similar, and details are not described herein again.

FIG. 6 is a schematic structural diagram of Embodiment 2 of a network device according to the present invention. As shown in FIG. 6, on the basis of the embodiment shown in FIG. 5, the network device in this embodiment further includes: a processing module 53.

The processing module 53 is configured to: if the receiving module 51 receives the sensor signal, and it is determined that a device discovery switch of the network device is in an enabled state, send the signal to the alerter; or before the receiving module 51 receives the sensor signal sent by the sensor signal transmitter, if it is determined that the device discovery switch is in the enabled state, control the receiving module 51 to receive the sensor signal sent by the sensor signal transmitter.

The device in this embodiment may be used to execute the technical solution in the method embodiment shown in FIG. 2 or FIG. 3, and implementation principles and technical effects thereof are similar, and details are not described herein again.

In an embodiment, the processing module 53 is further configured to:
when the network device is in a fault state, set the device discovery switch to the enabled state; and/or
when the network device is at a starting stage, set the device discovery switch to a disabled state; and/or
receive a configuration control message that is sent by a network management device and includes a switch configuration state of the device discovery switch, and set a state of the device discovery switch according to the switch configuration state.

The device in this embodiment may be used to execute the technical solution in the method embodiment shown in FIG. 4, and implementation principles and technical effects thereof are similar, and details are not described herein again.

Further, when the switch configuration state is the disabled state, the processing module 53 is specifically configured to:
determine whether the network device is in a non-fault state, and if the network device is in the non-fault state, set the device discovery switch to the disabled state.

FIG. 7 is a schematic structural diagram of Embodiment 1 of a network device according to the present invention. As shown in FIG. 7, a network device 700 in this embodiment includes: a sensor 71 and an alerter 72, where the sensor 71 is configured to receive a sensor signal sent by a sensor signal transmitter, and the sensor 71 determines to send a signal to the alerter 72 according to the sensor signal, so that the alerter 72 sends an alert signal, where the alert signal is used to indicate a location of the network device 700 and/or indicate that the network device 700 exists within a preset range.

In an embodiment, the sensor is a wireless sensor, and a difference between this embodiment and the embodiment shown in FIG. 7 is that the alerter is integrated into the sensor signal transmitter.

Specifically, the sensor in this embodiment may be a wireless sensor. After receiving an electrical signal sent by the sensor, the alerter integrated into the sensor signal transmitter sends the alert signal. Network device maintenance personnel may determine, according to an alert signal on a carried or handheld sensor signal transmitter, that the network device that is to be searched for exists within the preset range, for example, the network device exists within 5 meters. It may be understood that, precision of discovering the network device in this embodiment is lower than that in an embodiment in which the alerter is integrated into the network device. However, in some application scenarios, the technical solution in this embodiment can improve efficiency of discovering the network device to some extent.

In an embodiment, the alerter includes a first alerter and a second alerter, where the first alerter is integrated into the network device, and the second alerter is integrated into the sensor signal transmitter.

In an embodiment, the sensor is a passive sensor or an active sensor.

If the sensor is the active sensor, the network device further includes: a power supply that supplies power to the active sensor.

Specifically, if the sensor in the network device is the active sensor but a power supply that supplies power to the active sensor is not disposed in the network device, a device discovery function cannot be provided during a power outage of the network device; when the network device further includes the power supply that supplies power to the active sensor, the device discovery function can still be provided during a power outage of the network device.

The device in this embodiment may be used to execute the technical solution in the method embodiment shown in FIG. 1, and implementation principles and technical effects thereof are similar, and details are not described herein again.

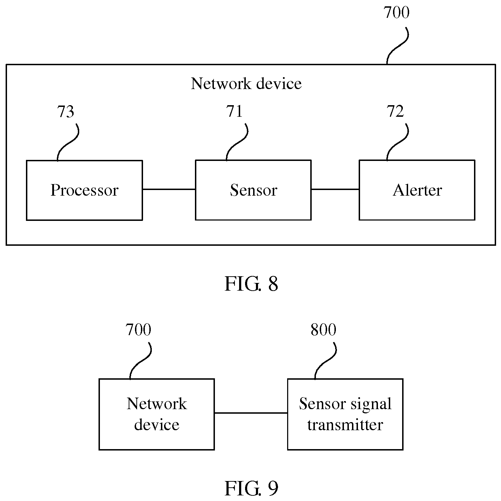

FIG. 8 is a schematic structural diagram of Embodiment 2 of a network device according to the present invention. As shown in FIG. 8, on the basis of the embodiment shown in FIG. 7, the network device in this embodiment further includes: a processor 73.

The processor 73 is configured to: if the sensor 71 receives the sensor signal, and it is determined that a device discovery switch of the network device is in an enabled state, send the signal to the alerter 72; or before the sensor 71 receives the sensor signal sent by the sensor signal transmitter, if it is determined that the device discovery switch is in the enabled state, control the sensor 71 to receive the sensor signal sent by the sensor signal transmitter.

The device in this embodiment may be used to execute the technical solution in the method embodiment shown in FIG. 2 or FIG. 3, and implementation principles and technical effects thereof are similar, and details are not described herein again.

In an embodiment, the processor 73 is further configured to:
when the network device is in a fault state, set the device discovery switch to the enabled state; and/or
when the network device is at a starting stage, set the device discovery switch to a disabled state; and/or
receive a configuration control message that is sent by a network management device and includes a switch configuration state of the device discovery switch, and set a state of the device discovery switch according to the switch configuration state. Further, when the switch configuration state is the disabled state, the processor 73 is further configured to:
   determine whether the network device is in a non-fault state, and if the network device is in the non-fault state, set the device discovery switch to the disabled state.

The device in this embodiment may be used to execute the technical solution in the method embodiment shown in FIG. 4, and implementation principles and technical effects thereof are similar, and details are not described herein again.

FIG. 9 is a schematic structural diagram of Embodiment 1 of a network device discovery system according to the present invention. As shown in FIG. 9, the network device discovery system in this embodiment includes: the network device 700 and a sensor signal transmitter 800 according to any one of the foregoing Embodiment 1 or 2 of the network device.

It should be noted that the schematic structural diagrams corresponding to the foregoing embodiments are merely exemplary, and connection relationships between parts or modules are not limited to the form shown in the figures, and may be subject to a situation in actual application.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention as define by the claims.

## Claims

1. A network device discovery method, comprising:
receiving (S101), by a network device (700), a sensor signal sent by a sensor signal transmitter (800); and
determining to send (S102), by the network device (700), a signal to an alerter according to the sensor signal, so that the alerter sends an alert signal, wherein the alert signal is used to indicate a location of the network device (700) and/or indicate that the network device (700) exists within a preset range;
**characterized in that** the alerter is integrated into the sensor signal transmitter (800).

2. The method according to claim 1, wherein the determining to send, by the network device (700), a signal to the alerter according to the sensor signal comprises:
after the network device (700) receives the sensor signal, and determines that a device discovery switch of the network device (700) is in an enabled state, sending (S202) the signal to the alerter.

3. The method according to claim 1 or 2, before the receiving, by the network device (700), a sensor signal sent by the sensor signal transmitter (800), further comprising:
if the network device (700) determines that the device discovery switch is in an enabled state, executing the step of receiving, by the network device (700), the sensor signal sent by the sensor signal transmitter (800).

4. The method according to claim 2 or 3, wherein the method further comprises:
when the network device (700) is in a fault state, setting (S401) the device discovery switch to the enabled state; and/or
when the network device (700) is at a starting stage, setting (S401) the device discovery switch to a disabled state; and/or
receiving (S401), by the network device (700), a configuration control message that is sent by a network management device and comprises a switch configuration state of the device discovery switch, and setting a state of the device discovery switch according to the switch configuration state.

5. The method according to claim 4, wherein when the switch configuration state is the disabled state, the setting, by the network device (700), the state of the device discovery switch according to the switch configuration state comprises:
determining, by the network device (700), whether the network device (700) is in a non-fault state, and if the network device (700) is in the non-fault state, setting the device discovery switch to the disabled state.

6. The method according to any of the preceding claims, with an additional first alerter (72) integrated into the network device (700).

7. A network device discovery system, comprising:
a sensor signal transmitter (800); and
a network device (700),
the network device (700) comprising:
a receiving module (51), configured to receive a sensor signal sent by the sensor signal transmitter (800); and
a sending module (52), configured to determine to send a signal to an alerter according to the sensor signal, so that the alerter sends an alert signal, wherein the alert signal is used to indicate a location of the network device (700) and/or indicate that the network device (700) exists within a preset range;
**characterized in that** the alerter is integrated into the sensor signal transmitter (800).

8. The system according to claim 7, wherein the network device (700) further comprises:
a processing module (53), wherein the processing module (53) is configured to: if the receiving module (51) receives the sensor signal, and a device discovery switch of the network device (700) is in an enabled state, send the signal to the alerter; or before the receiving module (51) receives the sensor signal sent by the sensor signal transmitter (800), if the device discovery switch is in the enabled state, control the receiving module (51) to receive the sensor signal sent by the sensor signal transmitter (800).

9. The system according to claim 8, wherein the processing module (53) is further configured to:
when the network device (700) is in a fault state, set the device discovery switch to the enabled state; and/or
when the network device (700) is at a starting stage, set the device discovery switch to a disabled state; and/or
receive a configuration control message that is sent by a network management device and comprises a switch configuration state of the device discovery switch, and set a state of the device discovery switch according to the switch configuration state.

10. The system according to claim 9, wherein when the switch configuration state is the disabled state, the processing module is further configured to:
determine whether the network device (700) is in a non-fault state, and if the network device (700) is in the non-fault state, set the device discovery switch to the disabled state.

11. The system according to any of the claims 7 to 10, additionally comprising a first alerter (72) integrated into the network device (700).

## Patentansprüche

1. Netzwerkvorrichtungsentdeckungsverfahren, das Folgendes umfasst:
Empfangen (S101) eines Sensorsignals, das von einem Sensorsignalsender (800) gesendet wird, durch eine Netzwerkvorrichtung (700) und
Bestimmen gemäß dem Sensorsignal, dass die Netzwerkvorrichtung (700) ein Signal an einen Hinweiser sendet (S102), derart dass der Hinweiser ein Hinweissignal sendet, wobei das Hinweissignal verwendet wird, um einen Standort der Netzwerkvorrichtung (700) anzuzeigen und/oder um anzuzeigen, dass die Netzwerkvorrichtung (700) in einem voreingestellten Bereich vorhanden ist;
**dadurch gekennzeichnet, dass** der Hinweiser in den Sensorsignalsender (800) integriert ist.

2. Verfahren nach Anspruch 1, wobei das Bestimmen gemäß dem Sensorsignal, dass die Netzwerkvorrichtung (700) ein Signal an den Hinweiser sendet, Folgendes umfasst:
nachdem die Netzwerkvorrichtung (700) das Sensorsignal empfangen und bestimmt hat, dass sich ein Vorrichtungsentdeckungsswitch der Netzwerkvorrichtung (700) in einem aktivierten Zustand befindet, Senden (S202) des Signals an den Hinweiser.

3. Verfahren nach Anspruch 1 oder 2, das vor dem Empfangen eines Sensorsignals, das vom Sensorsignalsender (800) gesendet wird, durch die Netzwerkvorrichtung (700) Folgendes umfasst:
wenn die Netzwerkvorrichtung (700) bestimmt, dass sich der Vorrichtungsentdeckungsswitch in einem aktivierten Zustand befindet, Ausführen des Schritts des Empfangens des Sensorsignals, das vom Sensorsignalsender (800) gesendet wird, durch die Netzwerkvorrichtung (700).

4. Verfahren nach Anspruch 2 oder 3, wobei das Verfahren ferner Folgendes umfasst:
wenn sich die Netzwerkvorrichtung (700) in einem Fehlerzustand befindet, Einstellen (S401) des Vorrichtungsentdeckungsswitches auf den aktivierten Zustand und/oder
wenn sich die Netzwerkvorrichtung (700) in einer Startphase befindet, Einstellen (S401) des Vorrichtungsentdeckungsswitches auf einen deaktivierten Zustand und/oder
Empfangen (S401) einer Auslegungssteuernachricht, die von einer Netzwerkverwaltungsvorrichtung gesendet wird und einen Switchauslegungszustand des Vorrichtungsentdeckungsswitches umfasst, durch die Netzwerkvorrichtung (700) und Einstellen eines Zustands des Vorrichtungsentdeckungsswitches gemäß dem Switchauslegungszustand.

5. Verfahren nach Anspruch 4, wobei, wenn der Switchauslegungszustand der deaktivierte Zustand ist, das Einstellen des Zustands des Vorrichtungsentdeckungsswitches gemäß dem Switchauslegungszustand durch die Netzwerkvorrichtung (700) Folgendes umfasst:
Bestimmen durch die Netzwerkvorrichtung (700), ob sich die Netzwerkvorrichtung (700) in einem Nicht-Fehlerzustand befindet, und, wenn sich die Netzwerkvorrichtung (700) im Nicht-Fehlerzustand befindet, Einstellen des Vorrichtungsentdeckungsswitches auf den deaktivierten Zustand.

6. Verfahren nach einem der vorhergehenden Ansprüche, wobei ein zusätzlicher erster Hinweiser (72) in die Netzwerkvorrichtung (700) integriert ist.

7. Netzwerkvorrichtungsentdeckungssystem, das Folgendes umfasst:
einen Sensorsignalsender (800) und
eine Netzwerkvorrichtung (700),
wobei die Netzwerkvorrichtung (700) Folgendes umfasst:
ein Empfangsmodul (51), das dazu ausgelegt ist, ein Sensorsignal, das vom Sensorsignalsender (800) gesendet wird, zu empfangen, und
ein Sendemodul (52), das dazu ausgelegt ist, gemäß dem Sensorsignal zu bestimmen, ein Signal an einen Hinweiser zu senden, derart, dass der Hinweiser ein Hinweissignal sendet, wobei das Hinweissignal verwendet wird, um einen Standort der Netzwerkvorrichtung (700) anzuzeigen und/oder um anzuzeigen, dass die Netzwerkvorrichtung (700) in einem voreingestellten Bereich vorhanden ist;
**dadurch gekennzeichnet, dass** der Hinweiser in den Sensorsignalsender (800) integriert ist.

8. System nach Anspruch 7, wobei die Netzwerkvorrichtung (700) ferner Folgendes umfasst: ein Verarbeitungsmodul (53), wobei das Verarbeitungsmodul (53) zu Folgendem ausgelegt ist: wenn das Empfangsmodul (51) das Sensorsignal empfängt und ein Vorrichtungsentdeckungsswitch der Netzwerkvorrichtung (700) sich in einem aktivierten Zustand befindet, Senden des Signals an den Hinweiser; oder bevor das Empfangsmodul (51) das Sensorsignal, das vom Sensorsignalsender (800) gesendet wird, empfängt, wenn sich der Vorrichtungsentdeckungsswitch im aktivierten Zustand befindet, Steuern des Empfangsmoduls (51) derart, dass es das Sensorsignal, das vom Sensorsignalsender (800) gesendet wird, empfängt.

9. System nach Anspruch 8, wobei das Verarbeitungsmodul (53) ferner zu Folgendem ausgelegt ist:
wenn sich die Netzwerkvorrichtung (700) in einem Fehlerzustand befindet, Einstellen des Vorrichtungsentdeckungsswitches auf den aktivierten Zustand und/oder
wenn sich die Netzwerkvorrichtung (700) in einer Startphase befindet, Einstellen des Vorrichtungsentdeckungsswitches auf einen deaktivierten Zustand und/oder
Empfangen einer Auslegungssteuernachricht, die von einer Netzwerkverwaltungsvorrichtung gesendet wird und einen Switchauslegungszustand des Vorrichtungsentdeckungsswitches umfasst, und Einstellen eines Zustands des Vorrichtungsentdeckungsswitches gemäß dem Switchauslegungszustand.

10. System nach Anspruch 9, wobei, wenn der Switchauslegungszustand der deaktivierte Zustand ist, das Verarbeitungsmodul ferner zu Folgendem ausgelegt ist:
Bestimmen, ob sich die Netzwerkvorrichtung (700) in einem Nicht-Fehlerzustand befindet, und, wenn sich die Netzwerkvorrichtung (700) im Nicht-Fehlerzustand befindet, Einstellen des Vorrichtungsentdeckungsswitches auf den deaktivierten Zustand.

11. System nach einem der Ansprüche 7 bis 10, das ferner einen ersten Hinweiser (72) umfasst, der in die Netzwerkvorrichtung (700) integriert ist.

## Revendications

1. Procédé de découverte de dispositif de réseau, comprenant :
la réception (S101), par un dispositif de réseau (700), d'un signal de détection envoyé par un émetteur de signal de détection (800) ; et
la détermination d'envoyer (S102), par le dispositif de réseau (700), un signal à un dispositif d'alerte conformément au signal de détection, afin que le dispositif d'alerte envoie un signal d'alerte, dans lequel le signal d'alerte est utilisé pour indiquer un emplacement du dispositif de réseau (700) et/ou pour indiquer que le dispositif de réseau (700) existe dans une plage prédéterminée ;
**caractérisé en ce que** le dispositif d'alerte est intégré dans l'émetteur de signal de détection (800).

2. Procédé selon la revendication 1, dans lequel la détermination d'envoyer, par le dispositif de réseau (700), un signal à un dispositif d'alerte conformément au signal de détection comprend :
après que le dispositif de réseau (700) reçoit le signal de détection, et détermine qu'un commutateur de découverte de dispositif du dispositif de réseau (700) est dans un état activé, l'envoi (S202) du signal au dispositif d'alerte.

3. Procédé selon la revendication 1 ou 2, comprenant en outre, avant la réception, par le dispositif de réseau (700), d'un signal de détection envoyé par l'émetteur de signal de détection (800) :
si le dispositif de réseau (700) détermine que le commutateur de découverte de dispositif est dans un état activé, l'exécution de l'étape de réception, par le dispositif de réseau (700), du signal de détection envoyé par l'émetteur de signal de détection (800).

4. Procédé selon la revendication 2 ou 3, dans lequel le procédé comprend en outre :
lorsque le dispositif de réseau (700) est dans un état défaillant, le réglage (S401) du commutateur de découverte de dispositif sur l'état activé ; et/ou
lorsque le dispositif de réseau (700) est dans un état de démarrage, le réglage (S401) du commutateur de découverte de dispositif sur un état désactivé ; et/ou
la réception (S401), par le dispositif de réseau (700), d'un message de commande de configuration qui est envoyé par un dispositif de gestion de réseau et comprend un état de configuration de commutateur du commutateur de découverte de dispositif, et le réglage d'un état du commutateur de découverte de dispositif conformément à l'état de configuration de commutateur.

5. Procédé selon la revendication 4, dans lequel lorsque l'état de configuration de commutateur est l'état désactivé, le réglage, par le dispositif de réseau (700), de l'état du commutateur de découverte de dispositif conformément à l'état de configuration de commutateur comprend :
la détermination, par le dispositif de réseau (700), du fait que le dispositif de réseau (700) se trouve ou non dans un état non défaillant, et si le dispositif de réseau (700) est dans l'état non défaillant, le réglage du commutateur de découverte de dispositif sur l'état désactivé.

6. Procédé selon l'une quelconque des revendications précédentes, comprenant un premier dispositif d'alerte supplémentaire (72) intégré au dispositif de réseau (700).

7. Système de découverte de dispositif de réseau, comprenant :
un émetteur de signal de détection (800) ; et
un dispositif de réseau (700),
le dispositif de réseau (700) comprenant :
un module de réception (51) configuré pour recevoir un signal de détection envoyé par l'émetteur de signal de détection (800) ; et
un module d'envoi (52) configuré pour déterminer d'envoyer un signal à un dispositif d'alerte conformément au signal de détection, afin que le dispositif d'alerte envoie un signal d'alerte, dans lequel le signal d'alerte est utilisé pour indiquer un emplacement du dispositif de réseau (700) et/ou pour indiquer que le dispositif de réseau (700) existe dans une plage prédéterminée ;
**caractérisé en ce que** le dispositif d'alerte est intégré dans l'émetteur de signal de détection (800).

8. Système selon la revendication 7, dans lequel le dispositif de réseau (700) comprend en outre :
un module de traitement (53), dans lequel le module de traitement (53) est configuré pour: si le module de réception (51) reçoit le signal de détection, et qu'un commutateur de découverte de dispositif du dispositif de réseau (700) est dans un état activé, envoyer le signal au dispositif d'alerte ; ou avant que le module de réception (51) reçoive le signal de détection envoyé par l'émetteur de signal de détection (800), si le commutateur de découverte de dispositif est dans l'état activé, commander le module de réception (51) pour recevoir le signal de détection envoyé par l'émetteur de signal de détection (800).

9. Système selon la revendication 8, dans lequel le module de traitement (53) est en outre configuré pour :
lorsque le dispositif de réseau (700) est dans un état défaillant, régler le commutateur de découverte de dispositif sur l'état activé ; et/ou
lorsque le dispositif de réseau (700) est dans un état de démarrage, régler le commutateur de découverte de dispositif sur un état désactivé ; et/ou recevoir un message de commande de configuration qui est envoyé par un dispositif de gestion de réseau et comprend un état de configuration de commutateur du commutateur de découverte de dispositif, et régler un état du commutateur de découverte de dispositif conformément à l'état de configuration de commutateur.

10. Système selon la revendication 9, dans lequel lorsque l'état de configuration de commutateur est l'état désactivé, le module de traitement est en outre configuré pour :
déterminer si le dispositif de réseau (700) se trouve ou non dans un état non défaillant, et si le dispositif de réseau (700) est dans l'état non défaillant, régler le commutateur de découverte de dispositif sur l'état désactivé.

11. Système selon l'une quelconque des revendications 7 à 10, comprenant de plus un premier dispositif d'alerte (72) intégré dans le dispositif de réseau (700).
